# EUROPEAN PATENT SPECIFICATION

(11) **EP 1 601 039 B1**
(45) Date of publication and mention of the grant of the patent: **20.01.2010**
(21) Application number: 04253080.8
(22) Date of filing: 25.05.2004
(51) Int. Cl.: H01M 8/10

(54) **Method for manufacturing membrane electrode assembly of fuel cell by printing processes**
Verfahren zur Herstellung einer Membran-Elektrodenanordnung einer Brennstoffzelle durch ein Druckverfahren
Procédé de fabrication d'un ensemble électrode-membrane d'une pile à combustible à l'aide d'un procédé d'impression

(43) Date of publication of application: 30.11.2005
(73) Proprietor: Institute of Nuclear Energy Research, Lungtan Taoyuan, Taiwan 325 (TW)
(72) Inventor: Chen, Cham-Ying, Chiaan Village, Lungtan (TW); Yang, Peng, Chiaan Village, Lungtan (TW); Lee, Ying-Shen, Chiaan Village, Lungtan (TW); Lin, Kin-Fu, Chiaan Village, Lungtan (TW)
(74) Representative: Bridle, Andrew Barry

(56) References cited:
- EP-A- 0 622 861
- EP-A- 1 318 559
- US-B1- 6 589 682
- KIM C S ET AL: "A novel process to fabricate membrane electrode assemblies for proton exchange membrane fuel cells" INTERNATIONAL JOURNAL OF HYDROGEN ENERGY, ELSEVIER SCIENCE PUBLISHERS B.V., BARKING, GB, vol. 23, no. 11, November 1998 (1998-11), pages 1045-1048, XP004299879 ISSN: 0360-3199
- YANG T-H ET AL: "Fabrication of a thin catalyst layer using organic solvents" JOURNAL OF POWER SOURCES, ELSEVIER SEQUOIA S.A. LAUSANNE, CH, vol. 127, no. 1-2, 10 March 2004 (2004-03-10), pages 230-233, XP004494983 ISSN: 0378-7753
- GIDDEY S ET AL: "Design, assembly and operation of polymer electrolyte membrane fuel cell stacks to 1 kWe capacity" JOURNAL OF POWER SOURCES, ELSEVIER SEQUOIA S.A. LAUSANNE, CH, vol. 125, no. 2, 14 January 2004 (2004-01-14), pages 155-165, XP004484039 ISSN: 0378-7753

## Description

### BACKGROUND OF THE INVENTION

### 1. Field of the Invention

The present invention relates generally to a manufacturing method for membrane electrode assembly of fuel cells, and in particular to a method for formation of membrane electrode assembly by printing processes so as to eliminate swelling and cracking of the membrane electrode assembly.

### 2. The Related Art

Fuel cells are an electro-chemical device that makes use of electro-chemical reaction between a fuel containing hydrogen and an oxidizer, such as oxygen contained in the surrounding air, to generate electrical power. The fuel cells are advantageous in low contamination, high efficiency and high power density. Thus, developments and researches are intensively devoted to the fuel cell field for exploitation of the utilization thereof.

A typical fuel cell stack is made up of a structure comprising several layers of which an intermediate layer is constituted by an ion exchange membrane that allow for transmission/penetration of ions and two catalyst layers are positioned on opposite sides of the ion exchange membrane to serve as anode and cathode in which chemical reactions are carried out. Two gas diffusion layers are formed on outside surfaces of the catalyst layers, which are commonly made of carbon paper or carbon cloth. Reactants diffuse through the gas diffusion layers to reach the anode and cathode catalyst layers and the reaction products of the anode and cathode are released by diffusion through the diffusion layers. Two guide plates, which are made up of carbon boards, metal boards or graphite fiber composite material boards are mounted on outside surfaces of the diffusion layers. Gas guide channels are defined in the diffusion layers adjacent the guide plates for guiding the flow of the reactants and reaction products of the anode and cathode.

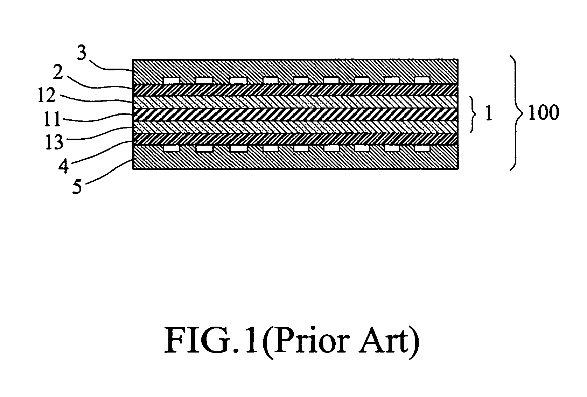

Figure 1 of the attached drawings shows a cross-sectional view of a typical ion exchange membrane fuel cell. The fuel cell, designated with reference numeral 100, comprises a membrane electrode assembly (MEA) 1 made up of an ion exchange membrane 11 sandwiched between an anode catalyst layer 12 and a cathode catalyst layer 13. The anode of the membrane electrode assembly 10 comprises an anode-side gas diffusion layer 2 and an anode-side guide plate 3. The cathode of the MEA 10 comprises a cathode-side gas diffusion layer 4 and a cathode-side guide plate 5.

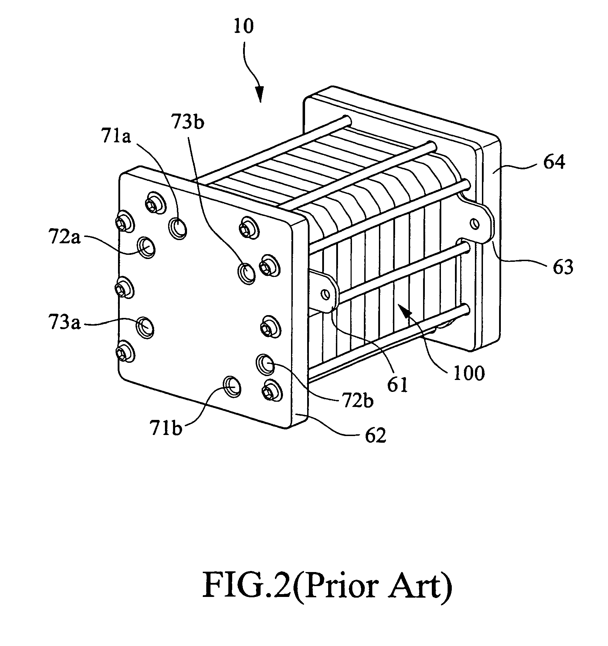

Also referring to Figure 2, a practical fuel cell stack 10 is made up of a plurality of fuel cells 100 to which an anode collector board 62, an anode terminal 61, a cathode collector board 64 and a cathode terminal 63 are mounted by means of fasteners and airtight sealing. The fuel cell stack 10 further comprises air inlet and outlet 71a, 71b in the anode terminal board 62 to supply air that contains oxygen for the chemical reaction of the fuel cell stack 10. Hydrogen inlet and outlet 72a, 72b are in the anode collector board 62 for supply of hydrogen for the reaction of the fuel cell stack 10. Coolant inlet and outlet 73a, 73b are also provided in the anode collector board 62 for maintaining proper operation temperature of the fuel cell stack 10.

The MEA is the most important component of the ion exchange membrane fuel cell. Uniform coating of the catalyst layers on the opposite sides of the ion exchange membrane 11 plays an important role in the performance of the fuel cell. The materials that make up the MEA are often brittle and of high costs and thus the arrangement of a manufacturing process for the MEA is one of the key issues of the fuel cell manufacturing.

However, heretofore the catalyst layers are formed by spraying and such a spraying operation often causes repeated coating on local areas of the catalyst layers, which not only unnecessarily extends the manufacturing cycle of the MEA, but also leads to non-uniform coatings of the catalysts. This in turn makes variation of the local thickness, leading to unstable coating quality. Some conventional techniques may overcome such problems but they are not suitable for atomization of mass production.

In addition, the ion exchange membrane, upon coating of the catalyst layers, absorbs solvent of the sprayed catalyst solution, which causes swelling of the MEA and eventually leads to cracking of the catalyst layers.

Taiwan Patent Publication No. 447160 teaches how to treat the ion exchange membrane with solvents in order to overcome the deformation of the MEA induced in the coating operation. The ion exchange membrane is soaked in solvents, such as alcohol-based solvents, to cause pre-swelling. The catalyst is then uniformly coated on the surfaces of the membrane, which does not swell when contacting the coating solution. The coating is then dried and the ion exchange membrane shrinks back to uniform thickness to provide a high quality MEA. The MEA so formed is thereafter sandwiched between two gas diffusion layers and is further subject to heating and pressing to complete the manufacturing cycle thereof.

Taiwan Patent Publication No. 529195 also discloses treating the ion exchange membrane with solvents, wherein swelling is induced on the membrane by being treated with alcohol-based solvents. Catalyst is then coated on the membrane, which is in turn sandwiched between two gas diffusion layers. Thereafter, the semi-product is subject to heating and pressing to complete the manufacturing of the MEA. The swelling is done in a two-phase manner, in which two alcohol-based solvents are employed to treat the membrane respectively. For example, the membrane is first soaked in a monohydric alcohol solvent of high volatility and then treated with a polyhydric alcohol solvent of low volatility. Examples of the monohydric alcohol solvent include methyl alcohol, ethyl alcohol, propyl alcohol and mixtures thereof and examples of the polyhydric alcohol solvent include ethylene glycol, propylene glycol, butylenes glycol, glycerol and mixtures thereof.

C.S. Kim et. al., International Journal of Hydrogen Energy, Elsevier, Vol 23, No. 11. November 1998, pp 1045-1048, refers to a process for fabricating membrane electrode assemblies for proton exchange membrane fuel cells. EP-A-1,318,559 refers to a method for the production of membrane electrode assemblies for fuel cells. EP-A-0,622,861 refers to the formation of the electrode layer of a ion exchange membrane by printing a ink of catalytically active particles on the surface of the membrane. Tae-Hyun Yang et.al., Journal of Power Sources, Elsevier, Vol. 127, No. 2, 2004, pp 230-233, refers to the fabrication of a thin catalyst layer using organic solvents. S. Giddey et, al. (Journal of Power Sources, Elsevier, Vol. 125, No. 2, 2004, pp 155-165) refers to the assembly of polymer electrolyte membrane fuel cell stacks. US-B-6,589,6821 refers to fuel cells incorporating nanotubes in fuel feed.

However, the conventional methods involve complicated processes of treatment with alcohols, which to some extents do not completely solve the problems caused by swelling. Further, maintaining good quality control of such treatments is difficult Thus, industrial utilization of such conventional methods is limited.

### SUMMARY OF THE INVENTION

Thus, a primary object of the present invention is to provide a method for manufacturing a membrane electrode assembly of a fuel cell by printing processes.

Another object of the present invention is to provide a method for manufacturing a membrane electrode assembly of a fuel cell, which reduces local thickness variation and thus realizes enhanced control over thickness and size of the membrane in manufacturing.

A further object of the present invention is to provide a process of manufacturing membrane electrode assembly that allows for ready automatization.

Yet a further object of the present invention is to provide a method for manufacturing a membrane electrode assembly, which effectively overcomes swelling and cracking occurring in coating catalysts on the membrane.

To achieve the above objects, in accordance with the present invention, there is provided a method for manufacturing a membrane electrode assembly (MEA) of a fuel cell, comprising the following steps:
(a) preparing an ion exchange membrane with a predetermined size, and preparing a first catalyst solution and a second catalyst solution, the ion exchange membrane having a first side surface and a second side surface, the step of preparing the ion exchange membrane includes the steps of
   (i) rinsing the ion exchange membrane in pure water at 80°C for one hour;
   (ii) washing the ion exchange membrane in 1M hydrogen peroxide solution at 80°C for one hour;
   (iii) rinsing the ion exchange membrane in pure water at 80°C for one hour;
   (iv) washing the ion exchange membrane in 1M sulfuric acid solution at 80°C; and
   (v) rinsing the ion exchange membrane at least one time with pure water at 80°C;
(b) positioning the ion exchange membrane of the predetermined size on a base plate, which is then mounted to a screen-printing platform;
(c) mounting a printing plate to a screen retainer of the platform;
(d) coating the first catalyst solution on a patterned area of the printing plate with a scraper and printing the first catalyst solution onto the first side surface of the ion exchange membrane positioned on the base plate with the scraper;
(e) positioning the ion exchange membrane on a heating board for heating both the ion exchange membrane and the first catalyst solutions printed on the first side surface of the ion exchange membrane;
(f) coating the second catalyst solution on a patterned area of the printing plate with a scraper and printing the second catalyst solution onto the second side surface of the ion exchange membrane positioned on the base plate with the scraper;.
(g) positioning the ion exchange membrane on the heating board for heating both the ion exchange membrane and the second catalyst solutions printed on the second side surface of the ion exchange membrane; and
(h) hot pressing the ion exchange membrane.

Thus, the present invention provides an ion exchange membrane that is cleaned in advance in a cleaning process and anode and cathode catalyst solution to be coated on anode and cathode side surfaces of the ion exchange membrane. The ion exchange membrane is trimmed to a predetermined size and is positioned on a thin base plate. The base plate is mounted to a printing platform. A printing plate, such as screen plate having predetermined pitch and mesh or a steel plate having a predetermined width and gap, is mounted to the printing platform. The catalyst solutions are uniformly coated on the printing plate with a scraper and then transferred and printed onto the side surfaces of the ion exchange membrane with the scraper. The ion exchange with the catalyst coated thereon is positioned on a heating board and heated to a temperature of 70-80°C. Upon completion of the heating step, the ion exchange membrane is removed from the heating board to wait for returning flat and the coating of the catalyst solution on the ion exchange membrane is completed. The printing and heating steps are repeated for both the anode and cathode of the ion exchange membrane.

The ion exchange membrane is further subject to hot pressing and then a piece of carbon cloth is positioned on each catalyst coating to serve as a diffusion layer. This completes the manufacturing of the membrane electrode assembly.

The MEA provided by the method of the present invention is advantageous in that the MEA possesses catalyst layers of uniform thickness with small local thickness variation and uniform porosity. The method solves the problems of repeated coating on local areas of the catalyst layers, uncontrollable process time and non-uniform coating of catalyst layers in conventional spraying. The MEA made by the method of the present invention only has minor swelling which will vanish upon a short time. No cracking would happen to the MEA, and hence the MEA possesses stable and good quality. Moreover, the method is suitable for atomization of mass production, and highly promotes the efficient production of MEA.

### BRIEF DESCRIPTION OF THE DRAWINGS

The present invention will be apparent to those skilled in the art by reading the following description of the best mode for carrying out the invention, with reference to the attached drawings, in which:
Figure 1 is a cross-sectional view of a conventional ion exchange fuel cell;
Figure 2 is a perspective view of a fuel cell stack comprised of a plurality of fuel cells shown in Figure 1 interposed between collector boards and terminal boards of anode and cathode;
Figure 3 is a flow chart illustrating a cleaning process of an ion exchange membrane in accordance with the present invention;
Figure 4 is a flow chart illustrating a preparation process of catalyst solutions in accordance with the present invention; and
Figure 5 is a flow chart illustrating a manufacturing process of a membrane electrode assembly in accordance with the present invention.

### DETAILED DESCRIPTION OF THE PREFERRED EMBODIMENTS

The present invention discloses a method for manufacturing a membrane electrode assembly (MEA) of a fuel cell by printing. An MEA is comprised of an ion exchange membrane having opposite surfaces on which anode catalyst and cathode catalyst are coated respectively. In the method in accordance with the present invention, the ion exchange membrane is cleaned first in a cleaning process and anode catalyst solution and cathode catalyst solution are prepared in a catalyst solution preparation process before a printing operation for the formation of the MEA is performed. These processes will be described in details hereinafter.

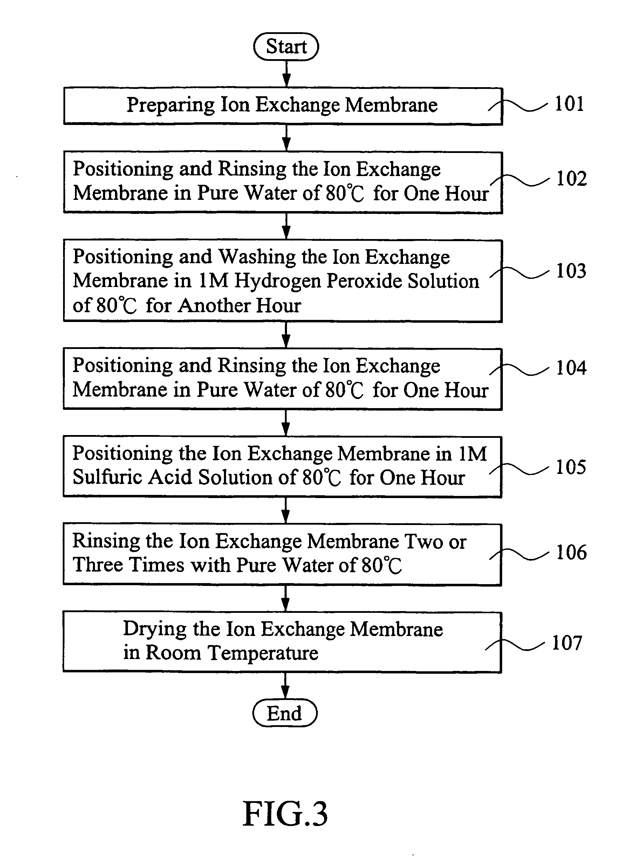

Figure 3 shows the ion exchange membrane rinsing process. An ion exchange membrane is prepared first (step 101). A suitable example for the ion exchange membrane is Nafion® of Du Pont Corporation. A preferred example of the ion exchange membrane is Nafion 117 having a thickness of 175µm, which is considered thick enough to block transmission/penetration of alcohol, serving as a solvent of the catalyst solutions, therethrough during the manufacturing process, which causes toxication to platinum that is commonly used as anode catalyst in the fuel cell. Effectively blocking the transmission/penetration of the alcohol through the ion exchange membrane to get into contact with the anode catalyst maintains the performance of the fuel cell.

The rinsing process comprises positioning and rinsing the ion exchange membrane in pure water of 80°C for one hour (step 102), positioning and washing the ion exchange membrane in 1M hydrogen peroxide solution of 80°C for another hour (step 103), positioning and rinsing the ion exchange membrane again in pure water of 80°C for one hour (step 104), positioning the ion exchange membrane in 1M sulfuric acid solution of 80°C for one hour (step 105) and completely rinsing the ion exchange membrane two or three times with pure water 80°C (step 106). The so cleaned ion exchange membrane is then dried in room temperature (step 107).

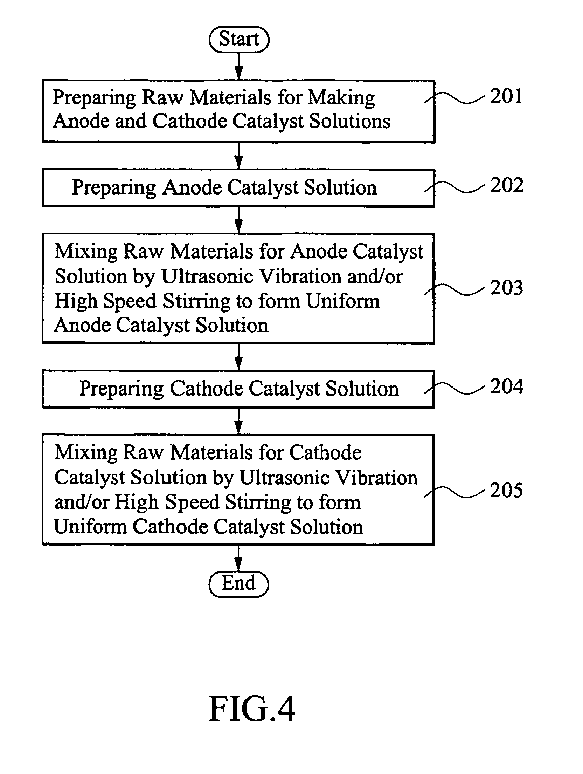

Figure 4 illustrates the process of preparing catalyst solutions. In step 201, raw materials for making the catalyst solutions are prepared. In an embodiment of the present invention, which takes a DMFC as an example, the catalyst solutions are made of Nafion solution Se-5112 obtained from Du Pont Corporation and Pt-Ru-C obtained from Johnson Matthey Co. for anode catalyst and Pt-C for cathode catalyst. In an application of PEMFC, the anode catalyst includes Pt-C, and the cathode catalyst also includes Pt-C.

To prepare the anode catalyst solution, step 202, one gram of nano-sized catalyst powders at a ratio of 2:1:2 for Pt-Ru-C is put into a flask and added with 4-8 ml Nafion solution, which is then subject to ultrasonic vibration and/or high speed stirring to form a uniform mixture, serving as anode catalyst solution, step 203. To prepare the cathode catalyst solution, step 204, one gram of nano-sized catalyst powders at a ratio of 1:1 for Pt-C is put into a flask and added with 4-8 ml Nafion solution, which is then subject to ultrasonic vibration and/or high speed stirring to form a uniform mixture, serving as anode catalyst solution, step 205.

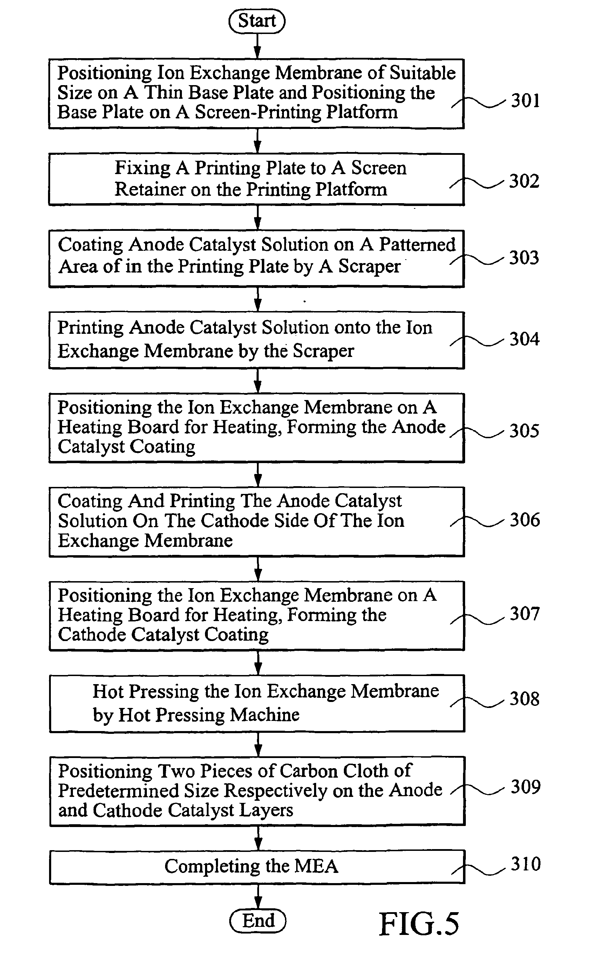

Once the ion exchange membrane cleaning process and the catalyst solution preparation process are done, the manufacturing process of the MEA starts, of which a flow chart is shown in Figure 5.

An ion exchange membrane that is trimmed to a suitable size is properly cleaned. The ion exchange membrane is positioned on a thin base plate made of stainless steel (step 301) and the base plate with the ion exchange membrane thereon is positioned on a screen-printing platform. In an embodiment of the present invention, the ion exchange membrane is trimmed to a size of 7cm x 7cm and is positioned on a base plate made of stainless steel having a surface area of 8cm x 8 cm and a thickness of 0.2mm.

A steel screen plate of 0.05-0.3mm pitch and 30-160 mesh or a steel plate having a predetermined width and gap is employed as a printing plate for performing printing operation. The printing plate is fixed to a screen retainer on the printing platform, step 302. The anode catalyst solution is uniformly coated on a patterned area of 5cm × 5cm in the printing plate by a scraper, step 303. The anode catalyst solution is then transferred and printed onto the ion exchange membrane positioned on the base plate by the scraper, step 304.

Upon printing of the anode catalyst solution is performed, the ion exchange membrane absorbs solvent that comprises the anode catalyst solution and gets swelled. The ion exchange membrane is positioned on a heating board after the printing operation, step 305. The ion exchange membrane and the anode catalyst solution are heated to about 70-80°C for 1-5 minutes. The heat that is applied to the ion exchange membrane facilitates evaporation of the solvent from the ion exchange membrane, thereby removing the solvent out of the ion exchange membrane. The heat also facilitates to cure the catalyst solution. In practice, only minor swelling of the ion exchange membrane occurs during the heating process and soon the ion exchange membrane gets straightened and flattened. No cracking of the catalyst layer is observed on the heat-treated ion exchange membrane.

An anode catalyst layer is thus formed on one surface (anode side) of the ion exchange membrane once the ion exchange membrane gets straightened and flattened. A similar process is employed on the cathode side of the ion exchange membrane, step 306, which repeats steps 301-304, but with the anode catalyst replaced by cathode catalyst, to form the cathode catalyst layer.

Once the cathode catalyst solution is printed on the cathode side surface of the ion exchange membrane, the ion exchange membrane is positioned on a heating board (step 307), and the ion exchange membrane and the cathode catalyst solution are heated to about 70-80°C for 1-5 minutes. This forms the cathode catalyst coating on the ion exchange membrane.

Once the anode and cathode catalyst layers are completed, the ion exchange membrane is fed into a hot pressing machine for hot pressing, step 308, in which the ion exchange membrane is subject to a pressure of about 1·96-9·8 MPa (20-100kgf/cm²) at a temperature of about 110-140°C for 1-3 minutes.

After the hot pressing operation, with the anode and cathode catalyst layers formed on the opposite side surfaces of the ion exchange membrane, two pieces of carbon cloth having a size of 5cm × 5cm are positioned, respectively, on the anode and cathode catalyst layers, step 309, to serve as anode gas diffusion layer and the cathode gas diffusion layer. The membrane electrode assembly is thus completed (step 310).

In the embodiment just described, the anode catalyst layer is formed first by means of printing and heating, yet it is possible to form the cathode catalyst layer before the anode catalyst layer or alternatively, the anode and cathode layers can be printed and heated at the same time. In other words, the sequence of the formation of the anode and cathode catalyst layers is of no concern in the present invention.

The method for manufacturing MEA by printing in accordance with the present invention has advantages including at least:
(1) Stable process: Due to the screen printing technique employed, the catalyst coating that is formed by scraping has a substantially uniform thickness, as well as uniform porosity. Local thickness variation is thus minimized and area and thickness can be well controlled. Drawbacks of the conventional techniques, such as repeated coating, variable cycle time of manufacturing and non-uniform thickness, may not occur.
(2) Process automatization: The screen for printing can be selected for different pitch and mesh in order to print catalyst solution of different thickness and to realize control over number of layers of catalyst and thickness of printing. This allows automatization of the MEA manufacturing process.
(3) Eliminating swelling and cracking of catalyst layer of MEA: The catalyst solution, after being printed on the ion exchange membrane, is immediately subject to heating, which helps removing the solvent absorbed in the ion exchange membrane, as well as facilitating to cure the catalyst solution. Thus, only minor swelling may occur during the printing process and it soon gets flattened. No cracking of the catalyst coating may happen. This makes the MEA so manufactured of high quality.

Although the present invention has been described with reference to the preferred embodiment thereof and the best mode for carrying out the present invention, it is apparent to those skilled in the art that a variety of modifications and changes may be made without departing from the scope of the present invention which is defined by the appended claims.

## Claims

1. A method for manufacturing a membrane electrode assembly of a fuel cell, comprising the following steps:
(a) preparing an ion exchange membrane with a predetermined size, and preparing an anode catalyst solution and a cathode catalyst solution, the ion exchange membrane having a first surface and a second surface, the step of preparing the ion exchange membrane includes the steps of
(i) rinsing the ion exchange membrane in pure water at 80°C for one hour;
(ii) washing the ion exchange membrane in 1M hydrogen peroxide solution at 80°C for one hour;
(iii) rinsing the ion exchange membrane in pure water at 80°C for one hour;
(iv)washing the ion exchange membrane in 1M sulfuric acid solution at 80°C; and
(v) rinsing the ion exchange membrane two or three times with pure water at 80°C;
(b) positioning the ion exchange membrane of the predetermined size on a base plate, which is then mounted to a screen-printing platform;
(c) mounting a printing plate to a screen retainer of the platform;
(d) coating the anode or cathode catalyst solution on a patterned area of the printing plate with a scraper and printing the catalyst solution onto the first surface of the ion exchange membrane positioned on the base plate with the scraper;
(e) positioning the ion exchange membrane on a heating board for heating both the ion exchange membrane and the catalyst solution printed on the first side surface of the ion exchange membrane;
(f) curing the catalyst solution and waiting for the ion exchange membrane to get flattened and thereby forming uniform coatings of the catalysts on the ion exchange membrane;
(g) coating the other of the anode or cathode catalyst solution on a patterned area of the printing plate with a scraper and printing the catalyst solution onto the second surface of the ion exchange membrane positioned on the base plate with the scraper;
(h) positioning the ion exchange membrane on the heating board for heating both the ion exchange membrane and the catalyst solution printed on the second surface of the ion exchange membrane; and
(i) hot pressing the ion exchange membrane.

2. The method as claimed in Claim 1, wherein the first surface is an anode surface of the ion exchange membrane and the second surface is a cathode surface of the ion exchange membrane.

3. The method as claimed in Claim 1, wherein the first surface is a cathode surface of the ion exchange membrane and the second surface is an anode surface of the ion exchange membrane.

4. The method as claimed in Claim 1, wherein the first catalyst solution is an anode catalyst solution comprising Pt-Ru-C and the second catalyst solution is a cathode catalyst solution comprises Pt-C.

5. The method as claimed in Claim 4, wherein preparing the anode catalyst solution comprises the following steps:
(i) disposing one gram of nano-sized catalyst powders containing Pt-Ru-C in a ratio of 2:1:2 in a flask;
(ii) adding 4-8ml of Nafion solution in the flask; and
(iii) inducing ultrasonic vibration to form a uniform mixture of the powder and the solution.

6. The method as claimed in Claim 4, wherein preparing the cathode catalyst solution comprises the following steps:
(i) disposing one gram of nano-sized catalyst powders containing Pt-C in a ratio of 1:1 in a flask;
(ii) adding 4-8ml of Nafion solution in the flask; and
(iii) inducing ultrasonic vibration to form a uniform mixture of the powder and the solution.

7. The method as claimed in Claim 1, wherein the ion exchange membrane is heated by the heating board to a temperature of 70-80°C for 1-5 minutes in steps (e) and (h).

8. The method as claimed in Claim 1, wherein the hot pressing in step (i) is performed by applying a pressure of 1.96 to 9.8 Mpa (20-100kgf/cm²) to the ion exchange membrane at a temperature of 110-140°C for 1-3 minutes.

9. The method as claimed in Claim 1, wherein the printing plate comprises a screen having predetermined pitch and mesh.

10. The method as claimed in Claim 1, wherein the printing plate comprises a steel plate of predetermined width and gaps.

## Patentansprüche

1. Methode zur Herstellung eines Membranelektrodenzusammenbaus einer Brennstoffzelle, die sich aus nachfolgenden Schritten zusammensetzt:
(a) Herstellung einer Ionenaustauschmembran von vorgegebener Größe und Ansatz einer Anoden-Katalysatorlösung und einer Kathoden-Katalysatorlösung, wobei die Ionenaustauschmembran eine erste und eine zweite Flächenseite aufweist und der Schritt der Herstellung der Ionenaustauschmembran folgende Schritte umfasst:
(i) Spülen der Ionenaustauschmembran in reinem Wasser bei 80°C über eine Stunde;
(ii) Waschen der Ionenaustauschmembran in 1 M Wasserstoffsuperoxidlösung bei 80°C über eine Stunde;
(iii) Spülen der Ionenaustauschmembran in reinem Wasser bei 80°C über eine Stunde;
(iv) Waschen der Ionenaustauschmembran in 1 M Schwefelsäurelösung bei 80°; und
(v) Zwei- oder dreimaliges Spülen der Ionenaustauschmembran mit reinem Wasser bei 80°C;
(b) Platzieren der Ionenaustauschmembran von vorgegebener Größe auf einer Tragplatte, die anschließend auf einer Siebdruckplattform montiert wird.
(c) Montage einer Druckplatte in einem Siebrahmen auf der Plattform;
(d) Auftragen der Anoden- oder Kathoden-Katalysatorlösung auf einen gemusterten Bereich der Druckplatte mit einem Abstreifer und Aufdrucken der Katalysatorlösung auf die erste Flächenseite der Ionenaustauschmembran auf der Tragplatte mit dem Abstreifer;
(e) Platzieren der Ionenaustauschmembran auf einer Heizplatte zum Erwärmen sowohl der Ionenaustauschmembran und der auf die erste Flächenseite der Ionenaustauschmembran aufgedruckten Katalysatorlösung;
(f) Aushärten der Katalysatorlösung und warten, bis sich die Ionenaustauschmembran verflacht und dabei einheitliche Katalysatorlagen auf der Ionenaustauschmembran bildet;
(g) Auftragen der anderen der Anoden- oder Kathoden-Katalysatorlösung auf einen gemusterten Bereich der Druckplatte mit einem Abstreifer und Aufdrucken der Katalysatorlösung auf die zweite Flächenseite der Ionenaustauschmembran auf der Tragplatte mit dem Abstreifer;
(h) Platzieren der Ionenaustauschmembran auf der Heizplatte zum Erwärmen sowohl der Ionenaustauschmembran und der auf die zweite Flächenseite der Ionenaustauschmembran aufgedruckten Katalysatorlösung;
(i) Warmpressen der Ionenaustauschmembran.

2. Methode gemäß Anspruch 1, bei der die erste Fläche eine Anodenfläche der Ionenaustauschmembran und die zweite Fläche eine Kathodenfläche der Ionenaustauschmembran ist.

3. Methode gemäß Anspruch 1, bei der die erste Fläche eine Kathodenfläche der Ionenaustauschmembran und die zweite Fläche eine Anodenfläche der Ionenaustauschmembran ist.

4. Methode gemäß Anspruch 1, bei der die erste Katalysatorlösung eine Pt-R-C enthaltende Anoden-Katalysatorlösung und die zweite Katalysatorlösung eine Pt-C enthaltende Kathoden-Katalysatorlösung ist.

5. Methode gemäß Anspruch 4, bei der der Ansatz der Anodenkatalysatorlösung folgende Schritte umfasst:
(i) Platzierung von einem Gramm Pt-Ru-C im Verhältnis von 2:1:2 enthaltenden Nanoteilchen-Katalysatorpulvern in einem Kolben;
(ii) Zusatz von 4-8 ml Nafionlösung zum Kolben, und
(iii) Induktion mit Ultraschallschwingungen zur Herstellung einer einheitlichen Mischung aus dem Pulver und der Lösung.

6. Methode gemäß Anspruch 4, bei der Ansatz der Kathodenkatalysatorlösung folgende Schritte umfasst:
(i) Platzierung von einem Gramm Pt-C im Verhältnis von 1:1 enthaltenden Nanoteilchchen-Katalysatorpulvern in einem Kolben;
(ii) Zusatz von 4-8 ml Nafionlösung zum Kolben, und
(iii) Induktion mit Ultraschallschwingungen zur Herstellung einer einheitlichen Mischung aus dem Pulver und der Lösung.

7. Methode gemäß Anspruch 1, bei der die Ionenaustauschmembran während der Schritte (e) und (h) von der Heizplatte 1-5 Minuten lang auf eine Temperatur von 70° bis 80°C erwärmt wird.

8. Methode gemäß Anspruch 1, bei der das Warmpressen im Schritt (i) durch Beaufschlagung der Ionenaustauschmembran mit einem Druck von 1,96 Mpa bis 9,8 Mpa (20-100 kp/cm²) bei 110°C bis 140°C über einen Zeitraum von 1-3 Minuten erfolgt.

9. Methode gemäß Anspruch 1, bei der die Druckplatte ein Sieb mit vorgegebenem Siebraster und vorgegbener Maschenweite aufweist.

10. Methode gemäß Anspruch 1, bei der die Druckplatte eine Stahlplatte von vorgegebener Breite mit und Aussparungen aufweist.

## Revendications

1. Procédé de fabrication d'un ensemble d'électrode à membrane d'une pile à combustible, comportant les étapes suivantes consistant à :
(a) préparer une membrane échangeuse d'ions selon une dimension prédéterminée, et préparer une solution de catalyseur anodique et une solution de catalyseur cathodique, la membrane échangeuse d'ions ayant une première surface et une deuxième surface, l'étape consistant à préparer la membrane échangeuse d'ions comprenant les étapes consistant à :
(i) rincer la membrane échangeuse d'ions dans de l'eau pure à 80°C pendant une heure ;
(ii) laver la membrane échangeuse d'ions dans 1 M de solution de peroxyde d'hydrogène à 80°C pendant une heure ;
(iii) rincer la membrane échangeuse d'ions dans de l'eau pure à 80°C pendant une heure ;
(iv) laver la membrane échangeuse d'ions dans 1 M de solution d'acide sulfurique à 80°C ; et
(v) rincer la membrane échangeuse d'ions deux ou trois fois avec de l'eau pure à 80°C ;
(b) positionner la membrane échangeuse d'ions de la dimension prédéterminée sur une plaque de base, qui est ensuite montée sur une plateforme d'impression par écran ;
(c) monter une plaque d'impression sur un dispositif de retenue d'écran de la plateforme ;
(d) enduire la solution de catalyseur anodique ou cathodique sur une zone à motif de la plaque d'impression à l'aide d'un grattoir et imprimer la solution de catalyseur sur la première surface de la membrane échangeuse d'ions positionnée sur la plaque de base à l'aide du grattoir ;
(e) positionner la membrane échangeuse d'ions sur une plaque chauffante pour chauffer à la fois la membrane échangeuse d'ions et la solution de catalyseur imprimée sur la première surface latérale de la membrane échangeuse d'ions ;
(f) laisser durcir la solution de catalyseur et attendre que la membrane échangeuse d'ions s'aplatisse et de ce fait former des revêtements uniformes des catalyseurs sur la membrane échangeuse d'ions ;
(g) enduire l'autre de la solution de catalyseur anodique ou cathodique sur une zone à motif de la plaque d'impression à l'aide d'un grattoir et imprimer la solution de catalyseur sur la deuxième surface de la membrane échangeuse d'ions positionnée sur la plaque de base à l'aide du grattoir ;
(h) positionner la membrane échangeuse d'ions sur la plaque chauffante pour chauffer à la fois la membrane échangeuse d'ions et la solution de catalyseur imprimée sur la deuxième surface de la membrane échangeuse d'ions ; et
(i) imprimer à chaud la membrane échangeuse d'ions.

2. Procédé selon la revendication 1, dans lequel la première surface est une surface anodique de la membrane échangeuse d'ions et la deuxième surface est une surface cathodique de la membrane échangeuse d'ions.

3. Procédé selon la revendication 1, dans lequel la première surface est une surface cathodique de la membrane échangeuse d'ions et la deuxième surface est une surface anodique de la membrane échangeuse d'ions.

4. Procédé selon la revendication 1, dans lequel la première solution de catalyseur est une solution de catalyseur anodique comportant du Pt-Ru-C et la deuxième solution de catalyseur est une solution de catalyseur cathodique comportant du Pt-C.

5. Procédé selon la revendication 4, dans lequel la préparation de la solution de catalyseur anodique comporte les étapes suivantes consistant à :
(i) disposer un gramme de nanopoudres de catalyseur contenant du Pt-Ru-C selon un rapport de 2:1:2 dans un ballon ;
(ii) ajouter 4 à 8 ml de solution de Nafion dans le ballon ; et
(iii) produire des vibrations ultrasonores pour former un mélange uniforme de la poudre et de la solution.

6. Procédé selon la revendication 4, dans lequel la préparation de la solution de catalyseur cathodique comporte les étapes suivantes consistant à :
(i) disposer un gramme de nanopoudres de catalyseur contenant du Pt-C selon un rapport de 1:1 1 dans un ballon ;
(ii) ajouter 4 à 8 ml de solution de Nafion dans le ballon ; et
(iii) produire des vibrations ultrasonores pour former un mélange uniforme de la poudre et de la solution.

7. Procédé selon la revendication 1, dans lequel la membrane échangeuse d'ions est chauffée par la plaque chauffante jusqu'à une température de 70 à 80°C pendant 1 à 5 minutes au cours des étapes (e) et (h).

8. Procédé selon la revendication 1, dans lequel l'impression à chaud au cours de l'étape
(i) est réalisée en exerçant une pression de 1,96 à 9,8 Mpa (20 à 100 kgf/cm²) sur la membrane échangeuse d'ions à une température de 110 à 140°C pendant 1 à 3 minutes.

9. Procédé selon la revendication 1, dans lequel la plaque d'impression comporte un écran ayant un pas et des mailles prédéterminés.

10. Procédé selon la revendication 1, dans lequel la plaque d'impression comporte une plaque en acier à largeur et espaces prédéterminés.
